# EUROPEAN PATENT SPECIFICATION

(11) **EP 1 498 477 B1**
(45) Date of publication and mention of the grant of the patent: **02.05.2007**
(21) Application number: 04014283.8
(22) Date of filing: 18.06.2004
(51) Int. Cl.: C12N 1/18, C12N 1/16, A21D 2/08, A21D 8/04

(54) **New active yeast in dry granular or powder form obtained through treatment of a mixture of known yeasts and its use in a pre-packed long-life preparation to be reconstituted with the addition of water**
Neue aktive Hefe in Form von trockenen Granulaten oder in Pulver Form ergestellt durch die Verarbeitung einer Mischung von bekannten Hefen, und deren Verwendung in langlebigen vorgepackten Produkte, die durch Wasser Zusatz rekonstruiert werden können
Nouvelle levure active sous forme de granules secs ou de poudre, obtenue a partir du traitement d'un melange de levures connues, son utilisation dans des prépatrations pré-emballées longue conservation et pouvant être reconstituées par addition d'eau

(30) Priority: 18.07.2003 IT ge20030054; 06.05.2004 IT ge20040037; 20.05.2004 IT ge20040044
(43) Date of publication of application: 19.01.2005
(73) Proprietor: B.F.L. Bakery Future Lines S.r.l., 19020 Ceparana (SP) (IT)
(72) Inventor: Vaiani, Giorgio Sig., 19020 Ceparana di Bolano (SP) (IT)
(74) Representative: Faraggiana, Vittorio

(56) References cited:
- EP-A- 0 375 558
- EP-A- 1 338 647
- WO-A-81/01415
- GB-A- 596 847
- GB-A- 2 009 583
- US-A- 3 993 783

## Description

The Invention concerned here deals with a procedure for the preparation of a new active yeast in dry granular or powder form, easy to transport and preserve over time as defined in claims 1 to 8.

As is well known, for the leavening of bread and cakes, natural yeasts, by acid fermentation, or compressed yeasts (such as brewer's yeast), by alkaline fermentation, may be used.

One of the greatest difficulties of working with a natural yeast is that of knowing the "right amount" of leavening, in that the fermentation is closely linked to the environmental conditions.

Upstream of this problem there is an even greater one, consisting of the "preparation" of the natural yeast where by preparation one means all the operations necessary to keep the natural yeast active and to bring it to be ready for use as such in dough or pastry.

The processing times are to be pointed out in this preparatory phase, which are very long and that require particular care, attention and skill (therefore the need for specialised personnel), without which hours and hours of work may be compromised.

Another very important factor of this phase is to be attributed to the environmental conditions in which the person who is preparing a natural yeast has to operate.

All together these problems have encouraged the spreading of the production of bread and cakes with compressed yeasts that produce leavening in part comparable to that obtained using natural yeast, however in much shorter times and with a much simpler handling of the process.

The difference between the two leavening systems can be found in the finished product with the following most evident characteristics:

### - Bread and cakes obtained with natural yeast -

Keep for much longer, a consequence of a higher acidity of the pastry or dough with slower development of mould,
have a "natural" aroma and taste,
have a very regular texture as a consequence of a slow and gradual leavening,
are considerably easier to digest as a consequence of an enzymatic "pre-digestion" that occurs during the leavening.

### - Bread and cakes obtained with compressed yeast -

Keep for a much shorter time due to the higher alkalinity of the pastry or dough and for the ease of formation of mould,
have a particular smell and taste,
have an irregular texture,
are much less easy to digest.

On the basis of that said earlier, natural yeast may only be used currently by large bread and cake companies, who can afford the specialised personnel for the treatment and preparation of natural yeast starting from the mother yeast. Small scale producers use compressed yeast (such as brewer's yeast) even though they obtain a less rich product that does not keep so long.

To obviate the inconveniences of the preparation of natural yeast as described, a procedure has been used, according to the Italian patent no. 1.136.191 of 24.07.80, by means of which a natural yeast may be put on the market that is easy to transport and preserve, even for a period of two months.

According to this patent, the mother yeast is transformed with a process that is carried out in a specialised factory, in such way as to give the user who normally uses compressed yeast, a product to use more easily and with considerable savings of time and costs.

The current state of the technique arranged thus, with this invention one tends to bring certain improvements to the field of yeasts, in such way as to:
- increase the life cycle of the yeast in its normal conditions;
- allow the preservation, transportation and storage of the yeast at room temperature;
- reduce the quantity of yeast useful for bread making compared to that required by the normal and well known use of natural yeasts;
- reduce the re-hydration time in the kneading phase;
- increase the weight of use of the yeast transforming it into bread;
- improve the taste, aroma and the freshness of the bakery product through the new yeast;
- allow temperature changes even below 0°C without harm.

The new yeast according to the present invention is obtained through opportune treatment of a mixture of known yeasts i.e. a mixture substantially between compressed yeast and natural yeast. According to a first solution of this invention the treatment may be carried out on a particular mixture containing said ingredients and in detail:
- natural yeast (from wheat, rye etc.),
- separation liquid obtained in the production of natural yeast,
- baker's yeast or compressed yeast.

As already explained natural yeast and the relative separation liquid, are well known and for instance are produced by means of the method subject of the aforesaid Italian Patent No. 1.136.191.

The third element mentioned above is the compressed yeast or brewer's yeast that is normally used by small and medium sized bakers as explained above.

With reference to said composition, the mentioned components i.e. the natural yeast, the separation liquid of the natural yeasts and the compressed yeast, are opportunely mixed and treated as indicated in the following:
- FIRST PHASE - One takes the natural yeast in active powder form and mixes it with the liquid derived from the preparation of the same natural yeast, obtained during the process of drying for separation through condensation, then adding the compressed yeast. One mixes them together for about five minutes at low speed, avoiding overheating.
- SECOND PHASE - By means of a conveyor belt or other suitable means, the mixture is sent to a multiple-cylinder machine (at least three cylinders) with differentiated openings, in such way that the product starts the process of integration with the ingredients used.
   The last cylinder has the task of sending out the mixture in the form of homogeneous and cold pastry or dough, as if it were an accurately homogeneous, silk ribbon, thereby ensuring the integration of the three products.
- THIRD PHASE - The homogenised mixture obtained in the previous phase, is placed in a suitable hopper and passes, in a gradual way, to a mechanical granulator with openings of about 4 mm. Thus one obtains a granular product such that it may be passed to a drying machine on a fluid bed with an entry temperature of about 65° and, after contact with the product, with an exit temperature of about 35-37°C. In a time of about 12-15 minutes, the product is ready with a humidity of between 7 and 9%.
- FOURTH PHASE - In this phase, the dried granulate obtained in the previous phase, passes to another mechanical granulator with openings of 2 mm.
- FIFTH PHASE - As a final phase, the granulate is cooled to a temperature of about 20°C and then is packed and stored at a temperature of about 20°C.

The active yeast obtained under a granular form according to this invention, may therefore be conveniently used by bakers, pastry chefs, etc., even small scale, in that the new yeast has the advantages as listed in the following:
- the life cycle of the new yeast increases up to 3 - 4 months from the date of packaging,
- it allows preservation, transport and storage of the yeast without the use of the cold chain, with a maximum temperature equal to 20°C,
- it requires smaller quantities of yeast compared to those required in normal utilisations,
- it reduces the time of re-hydration,
- during processing the weight of the new yeast increases by 32 - 34% compared to the initial weight, transforming itself into bread,
- the taste, aroma and freshness of the baked product all improve with the new yeast, in that the final product has 70%natural yeast in active powder,
- it allows temperature changes even below 0°C without harm, bearing in mind that such low temperatures provoke damage to the known natural yeast.

As an example for orientation, the quantities of the various ingredients are as indicated in the following:
- natural yeast in active powder 35 - 40% in weight,
- separation liquid 1 - 2% in weight,
- compressed yeast 55 - 58% in weight,
with attainment of a final product composed indicatively of 70% of active yeast and 30% of compressed yeast and with a neutral pH.

Naturally the quantities indicated may be varied on the basis of particular needs, just as other products that may improve in certain cases the composition of the yeast and the result of the baking may be added to the ingredients of the composition according to the invention.

A second solution according to this invention is simply based on the blending of the two main ingredients and in detail of:
- natural yeast in active powder form 40 - 45% in weight,
- baker's yeast or compressed yeast, 55 - 60% in weight.

With reference to said composition, the above mentioned components are opportunely mixed and treated as indicated in the following:
- FIRST PHASE - One takes the natural yeast in active powder form and one hydrates it bringing the level of humidity from approximately 6% to about 10%. One adds the compressed yeast generally in powder form with a temperature of about 7° C.
- SECOND PHASE - the mixture is sent to a multiple-cylinder machine with differentiated openings, in such way that a process of amalgamation of ingredients takes place, with attainment of a homogenised paste.
- THIRD PHASE - The homogenised paste is sent to a granulator and dried in a fluid bed machine, in such way as to obtain a product with 7 - 9% of humidity.
- FOURTH PHASE - The dry and cooled granulate may be packaged either in granular form or ground to a powder.

The active yeast according to the present invention allows a great advantages, i.e. the pre-packed, long-life preparation including floor, yeast and salt to be completed with just the addition of water.

Nowadays various types of yeasts are known that are used in the bakery industry etc. These yeasts are in practice:
- natural yeast in paste with acid fermentation,
- dry natural yeast with acid fermentation,
- compressed yeast (brewer's yeast) in pats with basic fermentation,
- dehydrated compressed yeast (brewer's yeast) with basic fermentation.

None of these known yeasts may be used to carry out the pre-packing of long-life containers or bags equipped with all the components necessary in the loose state (flour, yeast, salt, etc.) to which it is only necessary to add water so as to obtain the dough or pastry to cook.

Indeed it is not possible to arrange these packets with natural yeast which being a paste creates immediate fermentation inside the mass with deterioration of the packed contents.

Neither is it possible to use natural yeast in powder in that one would immediately create a leavening due to the humidity of the flour that is 15% on average.

Even the use of compressed yeast in pats does not allow pre-packing of the composition making up the bread-baking, in that such yeast is made up of living cells within a substratum containing a minimum humidity of 75%. This high humidity immediately activates fermentation.

Even compact dehydrated yeast in powder cannot be used to prepare the packet ready for use with just the addition of water, in that it is extremely hygroscopic and absorbs humidity from the environment. In general this brewer's yeast in powder form may only be used if vacuum packed or in a modified atmosphere.

Therefore all the said yeasts if mixed and kept for long periods in close contact with flour, will create processes of cell duplication and consequent fermentation, making the packaging in packets or containers impossible given that the mixture would undergo damage with superficial growth of mould.

Products destined to domestic use exist i.e. packets containing flour, salt and yeast, but such yeast is placed in a small packet with no contact with the flour (see the dehydrated compressed yeast as mentioned above) or it is in the form of raising agent based on sodium pyrophosphate and bicarbonate of soda. This latter example is not suitable for bread-making.

The active yeast according to the invention presents:
- an excellent preliminary blending with the flour and salt in dosed quantities and this allows it to be preserved, transported and stored without the use of the cold chain, with a maximum temperature of up to 20° C.
- has a life cycle of up to 3 - 4 months from the date of packaging,
- does not suffer from the humidity present in the flour in that it is in the dry state and with neutral pH practically.

Since this new yeast may be used normally and indifferently by large or small bakers or pastry chefs, the preparation according to the invention that envisages the set of all the components necessary with the exclusion of water, may be bought in containers of various shapes and sizes and used by anyone, large, medium or small, or even by housewives.

Clearly other possible products or ingredients may be added to the pre-packed mixture as described that are compatible with the basic ingredients i.e. flour, yeast and salt.

## Claims

1. Active yeast in granular or powder form for the production of bread, cakes and similar bakery products, **characterized in that** said yeast consists of a mixture of natural yeasts obtainable by acid fermentation, in active powder form and compressed yeasts.

2. Active yeast according to claim 1, **characterized in that** the amounts of the ingredients forming the mixture are:
- natural yeasts in active powder: 40-45% in weight;
- compressed yeasts: 55-60% in weight.

3. Active yeast according to claim 1, **characterized in that** the mixture further comprises a separation liquid deriving from a drying process to which said natural yeasts are previously submitted.

4. Active yeast according to claim 3, **characterized in that** the amounts of the ingredients forming the mixture are:
- natural yeasts in active powder: 35-40% in weight;
- compressed yeasts: 55-58% in weight;
- separation liquid: 1-2% in weight.

5. Method for producing an active yeast in granular or powder form for the production of bread, cakes and similar bakery products, **characterized by** the following steps:
- a natural yeast obtainable by acid fermentation, in active powder form is hydrated to a humidity level of 6-10% and mixed with a compressed yeast generally in powder form with a temperature of about 7°C;
- the mixture thereby obtained is sent to a multiple-cylinder machine with differentiated openings, wherein a process of amalgamation of ingredients is carried out, thereby obtaining a homogenized paste;
- the homogenized paste is sent to a granulator and dried in a fluid-bed machine, thereby obtaining a dry granulated product having a humidity level of 7-9%;
- the dry granulated product is cooled and packaged in granular form or after having been ground into a powder form.

6. Method for producing an active yeast in granular or powder form for the production of bread, cakes and similar bakery products, **characterized by** the following steps:
- a natural yeast obtainable by acid fermentation, in active powder form is mixed with a separation liquid deriving from a drying process to which said natural yeast was previously submitted and then is mixed with a compressed yeast;
- these components are mixed together for about 5 minutes at low speed, avoiding overheating;
- by means of suitable conveyor means, such as a conveyor belt, the mixture thereby obtained is sent to a multiple-cylinder machine with differentiated openings, wherein a process of amalgamation of ingredients is carried out, thereby obtaining a homogenized paste;
- the homogenized paste is placed into a hopper, so as to pass, in a gradual way, to a mechanical granulator with openings of about 4 mm and then is dried for about 12-15 minutes in a fluid-bed machine with an entry temperature of about 65°C and an exit temperature of about 35-37°C, thereby obtaining a dry granulated product having a humidity level of 7-9%;
- the dry granulated product is sent to a further mechanical granulator with openings of about 2 mm;
- the dry granulated product is cooled to a temperature of about 20°C and packaged and stored at a temperature of about 20°C in granular form or after having been ground into a powder form.

7. Pre-packed preparation for the production of bread, cakes and similar bakery products, including flour, yeast and salt, and to be completed by addition of water, **characterized in that** the yeast consists of a mixture of natural yeasts obtainable acid fermentation, in active powder form and compressed yeasts, the mixture being treated to form a dry granulated or powder product.

8. Pre-packed preparation according to claim 7, **characterized in that** the mixture further comprises a separation liquid deriving from a drying process to which said natural yeasts are previously submitted.

## Patentansprüche

1. Aktive Hefe in körniger oder Pulverform für die Herstellung von Brot, Gebaeck und ähnlichen Backprodukten, **gekennzeichnet dadurch, dass** die genannte Hefe aus einem Gemisch von natürlichen Hefen, die man durch saure Gärung erhält, aus Aktivpulverform und zusammengepressten Hefen besteht.

2. Aktive Hefe gemäß Anspruch 1, **gekennzeichnet dadurch, dass** die Mengen der Zutaten, die das Gemisch bilden folgende sind:
- Natürliche Hefen in Aktivpulver: 40-45% an Gewicht;
- Zusammengepresste Hefen: 55-60% an Gewicht.

3. Aktive Hefe gemäß Anspruch 1, **gekennzeichnet dadurch, dass** das Gemisch außerdem eine Trennflüssigkeit enthält, die sich aus einem Trockenprozess ergibt, dem die genannten Hefen zuvor unterzogen werden.

4. Aktive Hefe gemäß Anspruch 3, **gekennzeichnet dadurch, dass** die Mengen der Zutaten, die das Gemisch bilden folgende sind:
- natürliche Hefen in Aktivpulver: 35-40% an Gewicht;
- zusammengepresste Hefen: 55-58% an Gewicht;
- Trennflüssigkeit: 1-2% an Gewicht.

5. Methode für die Herstellung einer aktiven Hefe in körniger oder Pulverform für die Herstellung von Brot, Gebaeck und ähnlichen Backwaren, **gekennzeichnet durch** die folgenden Schritte:
- eine natürliche Hefe, die man bei saurer Gärung erhält, in Aktivpulverform ist bis zu einem Feuchtigkeitsgrad von 6-10% wasserhaltig und wird mit einer zusammengepressten Hefe gemischt, die normalerweise in Pulverform bei einer Temperatur von etwa 7°C ist;
- das so erhaltene Gemisch wird zu einer Mehrfachzylindermaschine mit unterschiedlichen Öffnungen geschickt, wobei ein Mischungsprozess der Zutaten stattfindet, wodurch man einen gleichförmiger Teig erhält;
- der gleichförmige Teig wird zu einem Granulierer geschickt und in einer Maschine mit fließender Unterlage getrocknet, wodurch man ein trockenes, körniges Produkt mit einem Feuchtigkeitsniveau von 7-9% erhält;
- das trockene körnige Produkt wird gekühlt und in körniger Form oder nachdem es in Pulver gemahlen wurde, abgepackt.

6. Methode für die Herstellung von aktiver Hefe in körniger oder Pulverform für die Herstellung von Brot, Gebaeck und ähnlichen Bäckereiprodukten, durch die folgenden Schritte **gekennzeichnet**:
- eine natürliche Hefe, die man durch saure Gärung erhält, in Aktivpulverform wird mit einer Trennflüssigkeit gemischt, die von einem Trockenprozess stammt, dem die genannte natürliche Hefe vorher unterzogen wurde, und dann wird sie mit einer zusammengepressten Hefe vermischt;
- diese Bestandteile werden 5 Minuten lang bei gemäßigter Geschwindigkeit zusammengemischt, wobei Überhitzen vermieden wird;
- durch ein geeignetes Fördermittel wie ein Förderband wird das so erhaltene Gemisch zu einer Mehrfachzylindermaschine mit unterschiedlichen Öffnungen geschickt, wo ein Mischungsprozess der Zutaten durchgeführt und dabei ein homogenisierter Teig erhalten wird;
- der homogenisierte Teig wird in einen Einfülltrichter gegeben, so dass er stufenweise durch einen mechanischen Granulierer mit Öffnungen von etwa 4 mm geht, und dann wird er etwa 12-15 Minuten lang in einer Maschine mit fließender Unterlage bei einer Eingangstemperatur von etwa 65°C und einer Ausgangstemperatur von etwa 35-37°C getrocknet, wobei man ein trockenes körniges Produkt erhält, das ein Feuchtigkeitsniveau von 7-9% aufweist;
- das trockenen körnige Produkt wird zu einem weiteren mechanischen Granulierer mit Öffnungen von etwa 2 mm geschickt;
- das trockene körnige Produkt wird bis zu einer Temperatur von etwa 20°C abgekühlt und verpackt und bei einer Temperatur von etwa 20°C in einer körnigen Form oder nachdem es zu Pulverform gemahlen wurde, gelagert.

7. Vorverpacktes Präparat für die Herstellung von Brot, Gebäck und ähnlichen Backwaren, das Mehl, Hefe und Salz enthält und durch Hinzufügen von Wasser vervollständigt wird, ist **dadurch gekennzeichnet, dass** die Hefe aus einem Gemisch von natürlichen Hefen, die man durch saure Gärung erhält, in Aktivpulverform und zusammengepressten Hefen besteht; diese Mischung wird behandelt, um ein trockenes, körniges oder pulverförmiges Produkt zu bilden.

8. Vorverpacktes Präparat gemäß Anspruch 7, **gekennzeichnet dadurch, dass** das Gemisch außerdem eine Trennflüssigkeit enthält, die aus einem Trockenprozess stammt, dem die genannten natürlichen Hefen vorher unterzogen wurden.

## Revendications

1. Levure active sous forme granulaire ou de poudre pour la fabrication de pain, gâteaux et produits de pâtisserie similaires, **caractérisée par le fait que** cette levure, se compose d'un mélange de levures naturelles pouvant être obtenues par fermentation acide en forme de poudre active et de levures comprimées.

2. Levure active selon revendication 1, **caractérisée par le fait que** les quantités d'ingrédients formant le mélange sont :
- des levures naturelles en poudre active : 40-45% en poids ;
- des levures comprimées : 55.60% en poids.

3. Levure active selon la revendication 1, **caractérisée par le fait que** le mélange contient en plus un liquide de séparation provenant du processus de séchage auquel les susdites levures naturelles ont été préalablement soumises.

4. Levure active selon la revendication 3, **caractérisée par le fait que** les quantités d'ingrédients formant le mélange sont :
- des levures naturelles en poudre active : 35-40% en poids ;
- des levures comprimées : 55-58% en poids ;
- du liquide de séparation : 1-2% en poids.

5. Méthode pour la production d'une levure active sous forme granulaire ou de poudre pour la fabrication de pain, gâteaux et produits de pâtisserie similaires, **caractérisé par** les opérations suivantes :
- une levure naturelle pouvant être obtenue par fermentation acide, en forme de poudre active, est hydratée à un niveau d'humidité de 6-10% et mélangée avec une levure comprimée généralement sous forme de poudre à une température d'environ 7°C ;
- le mélange ainsi obtenu est envoyé à une machine à cylindres multiples dotée d'ouvertures différentiées à l'intérieur de laquelle le processus d'amalgamation des ingrédients a lieu avec, en résultant, l'obtention d'une pâte homogénéisée ;
- la pâte homogénéisée est envoyée à un granulateur et séchée sur une machine à lit liquide de manière à obtenir un produit granulé séché ayant un niveau d'humidité de 7-9% ;
- le produit granulé séché est refroidi et emballé sous forme granulaire ou après avoir été moulu en poudre.

6. Méthode pour fabriquer une levure active sous forme granulaire ou de poudre pour la fabrication de pain, gâteaux et produits de pâtisserie similaires, qui se **caractérise par** les opérations suivantes :
- une levure naturelle pouvant être obtenue par fermentation acide sous forme de poudre active est mélangée avec le liquide de séparation provenant d'un processus de séchage auquel la levure naturelle a été préalablement soumise et est ensuite mélangée avec une levure comprimée ;
- ces composants sont mélangés tous ensemble pendant environ 5 minutes à faible vitesse, en évitant la surchauffe ;
- au moyen d'un convoyeur approprié tel un tapis convoyeur, le mélange ainsi obtenu est envoyé à une machine à cylindres multiples dotée d'ouvertures différentiées à l'intérieur de laquelle un processus d'amalgamation des ingrédients est effectué, obtenant ainsi une pâte homogénéisée ;
- la pâte homogénéisée est placée dans un tamis de manière à passer, de manière graduelle, sur un granulateur mécanique doté d'ouvertures d'environ 4 mm et est ensuite séchée pendant environ 12-15 minutes sur un lit liquide de la machine avec une température d'entrée d'environ 65°C et une température de sortie d'environ 35-37°, obtenant ainsi un produit granulé séché ayant un niveau d'humidité de 7-9% ;
- le produit granulé séché est envoyé sur un autre granulateur mécanique doté d'ouvertures d'environ 2 mm ;
- le produit granulé séché est refroidi à une température d'environ 20°C est emballé et stocké à une température d'environ 20°C sous forme granulaire ou après avoir été moulu sous forme d'une poudre.

7. Préparation pré-emballée pour la fabrication du pain, gâteaux et produits de pâtisserie similaires, comprenant farine, levure et sel, et à compléter par l'ajout d'eau, **caractérisée par le fait que** la levure contient un mélange de levures naturelles pouvant être obtenues par fermentation acide, sous forme de poudre active, et de levures comprimées, le mélange étant traité pour former un produit sous forme de granulé séché ou de poudre.

8. Préparation pré-emballée selon la revendication 7, **caractérisée par le fait que** le mélange contient un liquide de séparation provenant d'un processus de séchage auquel les susdites levures naturelles sont préalablement soumises.
